# EUROPEAN PATENT SPECIFICATION

(11) **EP 1 901 481 B1**
(45) Date of publication and mention of the grant of the patent: **22.06.2011**
(21) Application number: 06775450.7
(22) Date of filing: 22.08.2006
(51) Int. Cl.: H04L 12/24

(54) **METHOD, SYSTEM AND ENTITY FOR REALIZING AN APPLICATION SERVICE**
VERFAHREN, SYSTEM UND EINHEIT ZUR SCHAFFUNG EINES ANWENDUNGSDIENSTES
PROCEDE, SYSTEME ET UNITE DE PRESTATION DE SERVICES D'APPLICATION

(30) Priority: 22.08.2005 CN 200510091289
(43) Date of publication of application: 19.03.2008
(73) Proprietor: Huawei Technologies Co., Ltd., Longgang District, Shenzhen Guangdong 518129 (CN)
(72) Inventor: LUO, Long, Guangdong 518129 (CN)
(74) Representative: Reinhard - Skuhra - Weise & Partner GbR
(86) International application number: PCT/CN2006/002132
(87) International publication number: WO 2007/022707

(56) References cited:
- CN-A- 1 425 979
- CN-A- 1 449 157
- US-A1- 2003 200 337
- US-A1- 2004 054 970
- US-A1- 2004 068 574
- CAMARILLO ERICSSON E BURGER BROOKTROUT H SCHULZRINNE COLUMBIA UNIVERSITY A VAN WIJK VIATAAL G: "Transcoding Services Invocation in the Session Initiation Protocol (SIP) Using Third Party Call Control (3pcc); rfc4117.txt" IETF STANDARD, INTERNET ENGINEERING TASK FORCE, IETF, CH, 1 June 2005 (2005-06-01), XP015041884 ISSN: 0000-0003

## Description

### Field of the Invention

The present invention relates to technologies of performing an application service, and particularly, to a method for performing an application service, a system for performing an application service, and a general service management entity.

### Background of the Invention

With the development of technologies and the change of market environment, the market movement within service providers or operators reflects more and more on the application service fields. The change occurs not only in the fixed service field, but also in the mobile service filed. Not only a basic voice service but also various data and multimedia services should be provided. To attain the above objective, a core network defined by the 3rd Generation Partnership Project (3GPP) includes not only the circuit switch domain for conventional voice services but also the packet switch domain for data access. The core network of Release 5 R5 further includes IP Multimedia Sub-system (IMS), and various IP multimedia services managed by Session Initiation Protocol (SIP) may be developed in the IMS. Currently, a typical IP multimedia service is the Push-to-Talk over Cellular (PoC) service. The problem of the prior art and the solution provided by the present innovation may be described with reference to the PoC service as an example.

The PoC service is a half-duplex and point-to-point or point-to-multipoint Voice on IP (VoIP) service based on a mobile network, and has the following attributes: firstly, starting to talk once one key is pushed and listening to the voice automatically; secondly, setting up a voice connection and a data connection simultaneously; thirdly, implementing point-to-point or point-to-multipoint group communications flexibly.

However, during the PoC service, a PoC client communicates with a PoC server directly or through the IMS. To implement a PoC service, a user needs to use a specific PoC client to access a PoC server. If a user uses the Internet to access the PoC server, the user also needs to install specific PoC client software in the PC, i.e. make the PC support the PoC service protocol. In addition, during the other application services, the communication mechanism between a client used by the user and an Application Server (AS) is similar to the communication mechanism for the PoC service. Therefore, if the user wants to use some related services on the basis of the PoC service, such as a messaging service, a conference service and a presence service, client software corresponding to the related services should be set at the client of the user so as to support the same service protocol as the corresponding AS and to implement the related services. In this way, if the user wants to use a service, a terminal supporting the service protocol of the service should be configured, or the original client should be updated and upgraded.

In user's point of view, the existing implementation mechanism of an application service may bring many troubles to the user, for example, the user can not use the PoC service if the user does not take a PoC terminal; further, even if the user wants to use the service through other networks, e.g. the Internet, the user can not access the service either because of lacking of the PoC client software.

With the development of communication technologies, there will be varieties of application services in the future. If each application service needs a client supporting the service protocol of the application service, the client software of various service protocols should be integrated in the client device of a user along with more and more application services. The implementation is difficult and the cost of a client is high, which is an obstacle for the development and deployment of application services.

United States patent application US 2003/0200337 A1 discloses a system for transferring multimedia information from a source location to a destination location, which applies a proxy transcoder server (PTS). The PTS has a transcoding module transcoding data, a capability module identifying a first capability of the source output and a second capability of the destination input, and a selecting a transcoding process based upon the first capability and the second capability.

United States patent application US 2004/0068574 A1 a WV-IMS relay and interoperability method. Mapping functionality is added between a Wireless Village (WV) server and a Presence, Messaging and Group (PMG) server of a 3GPP IP multimedia subsystem (IMS) to permit interoperability between WV clients for instant messaging and presence services for operators who have deployed both IMS and WV.

### Summary of the Invention

An objective of the present invention is to provide a method, system and entity for performing an application service, so that a client can flexibly access various Application Servers (ASs) to implement various application services.

To attain the above objective, the technical scheme of the present invention is given as follows.

A method for performing an application service, the method applying to a system including a first party, a second party and a general service management entity, and the method includes: receiving, by the general service management entity, an operation command containing an application service indication from the first party;
parsing, by the general service management entity, the operation command to obtain the application service indication and determining an application service requested by the first party;
sending, by the general service management entity, a message containing service information to the first party, wherein the service information indicates that the first party is required to enter requested registration information to enable the first party to use the application service;
receiving, by the general service management entity, a first operation request containing the registration information which is sent by the first party corresponding to a service protocol supported by the first party;
parsing, by the general service management entity, the first operation request to obtain the registration information, and constructing a second operation request containing the registration information according to the service protocol supported by the second party;
sending, by the general service management entity, the second operation request to the second party for performing the service registration of the first party
where the first party is a client, and the second party is an Application Server, AS, or a service bearer network where an AS is located.

Preferably, the method further includes:
receiving, by the general service management entity, an operation response from the second party after the second party performs the service registration of the first party according to the second operation; and
parsing, by the general service management entity, the operation response to obtain a response indication, and constructing and sending (312) an operation response to the first party according to the response indication and the service protocol supported by the first party.

Preferably, the method further includes:
upon receiving the first operation request, determining whether the service protocol supported by the first party matches the service protocol supported by the second party;
if the result of the determination is yes, forwarding the first operation request to the second party directly; otherwise, providing a service protocol support function according to the service protocol supported by the second party, constructing and sending a second operation request to the second party according to the service protocol supported by the second party.

Preferably, the method further includes:
obtaining, by the general service management entity, a service capability of a sender client of service data and a service capability of a receiver client of service data;
upon receiving the service data from the sender client, determining, by the general service management entity, whether the service capability of the sender client matches the service capability of the receiver client, or whether the service capability of the sender client matches a service capability of the AS or the service bearer network;
if the result of the determination is yes, forwarding the service data to the receiver client, or the AS or the service bearer network correspondingly; otherwise, providing a service capability support function according to the service capability of the receiver client, or according to the service capability of the AS or the service bearer network, converting the service data and sending the converted service data to the receiver client, or the AS or the service bearer network correspondingly.

Preferably, the method further includes:
if the service capability of the AS or the service bearer network is updated, updating, by the general service management entity, the service capability support function of the general service management entity; and
performing, by the general service management entity, no processing for the client; or sending an operation command to the client to update the service capability of the client; or pushing service information indicating update of the service capability to the client.

Preferably, the obtaining the service capability of the client includes:
obtaining the service capability of the client from client service capability information set in advance; or receiving service capability information sent by the client; or receiving an operation command which is sent by the client according to an indication of service information pushed by the general service management entity and contains service capability information of the client.

Preferably, the service capability of the sender client matches the service capability of the receiver client or matches the service capability of the AS or the service bearer network if:
the service capability of the sender client has a corresponding item with the service capability of the receiver client, or the service capability of the sender client has a corresponding item with the service capability of the AS or the service capability of the service bearer network correspondingly; and if a service protocol supported by the sender client has an identical item with a service protocol supported by the receiver client, or with the service protocol supported by the AS or the service bearer network correspondingly.

Preferably, if the service protocol is a service control layer protocol, the service control layer protocol supported by the client, or supported by the AS or the service bearer network includes at least one of: Session Initiation Protocol, SIP, H.323 protocol, Hypertext Transfer Protocol, HTTP, and Wireless Application Protocol, WAP.

Preferably, if the service protocol is a service bearer layer protocol, the service bearer layer protocol includes: service data codec format and service data encapsulation protocol;
the sender client, or the receiver client, or the AS or the service bearer network supports a service data encapsulation protocol include: Real-time Transport Protocol, RTP, and/or Internet Protocol, IP;
the service data codec format supported by the sender client, or the receiver client, or the AS or the service bearer network includes at least one of: a REAL VIDEO format, an Advanced System Format, ASF, an Audio/Video Inserted, AVI format, a Moving Pictures Experts Group 1, MPEG 1, format, an MPEG 2 format, an MPEG 4 format, a UNICODE format and an Adaptive Multi-Rate, AMR, format.

Preferably, the method further includes:
pushing service information or sending an operation command, by the general service management entity, to the first party actively; initiating, by the first party, the service operation with the second party according to the service information from the general service management entity, or obtaining service notification information from the service information; updating, by the first party, the service protocol and/or service capability which are supported by the first party according to the operation command from the general service management entity; or
pushing service information or sending an operation command, by the general service management entity, to the second party actively; initiating, by the second party, the service operation with the first party according to the service information from the general service management entity, or obtaining service notification information from the service information; updating, by the second party, the service protocol and/or service capability which are supported by the second party according to the operation command from the general service management entity.

Preferably, the method further includes: receiving a logon request from the first party.

Preferably, the method further includes:
if the AS or the service bearer network is added or removed, or if the service protocol supported by the AS or the service bearer network is updated, updating, by the general service management entity, a service protocol supported by the general service management entity itself; and
performing, by the general service management entity, no processing for the client; or sending an operation command to the client to update the service protocol supported by the client; or pushing service information indicating update of the service protocol to the client.

Preferably, the client supports at least one service protocol; there is at least one AS, and each AS supports at least one service protocol; there is at least one service bearer network, and each service bearer network supports one or more service protocols; the general service management entity supports service protocols supported by the at least one AS and the at least one service bearer network;
the general service management entity determines the AS or the service bearer network which performs the service operation with the client according to the first operation request from the client, and determines the service protocol supported by the AS or the service bearer network, and performs the service operation with the AS or the service bearer network determined according to the service protocol determined.

Preferably, the AS is a Push-to-Talk over Cellular, PoC, server, a Presence server, an XML Document Management, XDM, server, a Streaming server, an Instant Messaging, IM, server, a Broadcast Multicast Service Center, BM-SC, or an E-mail server; and
the service bearer network is an IP Multimedia Sub-system, IMS, a SIP network, an H.323 network, an IP network, an Asynchronous Transfer Mode, ATM, network, a Multi-Protocol Label Switching, MPLS, network or a Synchronous Digital Hierarchy, SDH, network.

A general service management entity is also provided. The general service management entity is configured between a first party and a second party, and includes one or more components operable for:
receiving, by the general service management entity, an operation command containing an application service indication from the first party;
parsing, by the general service management entity, the operation command to obtain the application service indication and determining an application service requested by the first party;
sending, by the general service management entity, a message containing service information to the first party, wherein the service information indicates that the first party is required to enter requested registration information to enable the first party to use the application service;
receiving, by the general service management entity, a first operation request containing the registration information which is sent by the first party corresponding to a service protocol supported by the first party;
parsing, by the general service management entity, the first operation request to obtain the registration information, and constructing a second operation request containing the registration information according to the service protocol supported by the second party;
sending, by the general service management entity, the second operation request to the second party for performing the service registration of the first party;
where the first party is a client, and the second party is an Application Server, AS, or a service bearer network where an AS is located.

Preferably, the one or more components are further operable for:
upon receiving the first operation request, determining whether the service protocol supported by the first party matches the service protocol supported by the second party;
if the result of the determination is yes, forwarding the first operation request to the second party directly; otherwise, providing a service protocol support function according to the service protocol supported by the second party, constructing and sending a second operation request to the second party according to the service protocol supported by the second party.

Preferably, the one or more components include:
a general service access management unit, operable for receiving the first operation request from the client and sending a first invoking command to a client protocol processing unit; receiving a second invoking command from the client protocol processing unit and sending a fourth operation request to the client corresponding to a service protocol supported by the client; and
the client protocol processing unit, operable for receiving the first invoking command from the general service access management unit, sending a second operation request to the AS or the service bearer network corresponding to a service protocol supported by the AS or the service bearer network; receiving a third operation request from the AS or the service bearer network and sending the second invoking command to the general service access management unit.

Preferably, the client protocol processing unit includes at least one client protocol processing module, and each client protocol processing module is connected to one AS and/or one service bearer network, and supports the service protocol supported by the AS and/or the service bearer network;
each client protocol processing module is operable for receiving the first invoking command from the general service access management unit, sending the second operation request to the AS connected to the client protocol processing module and/or the service bearer network connected to the client protocol processing module according to the service protocol supported by the client protocol processing module; and receiving the third service operation request from the AS or the service bearer network and sending the second invoking command to the general service access management unit.

Preferably, the one or more components further include a service data processing unit, operable for receiving service data from the service access management unit, sending the service data to the client protocol processing unit upon converting the service data; receiving service data from the client protocol processing unit, sending the service data to the general service access management unit upon converting the service data.

Preferably, the general service access management unit is further operable for sending first service information to the client; and the client protocol processing module is further operable for sending second service information to the AS or the service bearer network.

Preferably, the general service access management unit is further operable for sending a first operation command to the client to update the service protocol supported by the client according to the first operation command; and
the client protocol processing module is further operable for sending a second operation command to the AS or service bearer network to update the service protocol supported by the AS or the service bearer network according to the second operation command.

A system for performing an application service is also provided. The system includes a first party, a second party, and a general service management entity as described above; where the first party is a client, and the second party is an Application Server, AS, or a service bearer network where an AS is located.

Preferably, there is at least one AS and/or at least one service bearer network; each AS or service bearer network supports at least one service protocol;
the general service management entity supports service protocols supported by the at least one AS and the at least one service bearer network.

Preferably, the AS is a Push-to-Talk over Cellular, PoC, server, a Presence server, an XML Document Management, XDM, server, a Streaming server, an Instant Messaging, IM, server, a Broadcast Multicast Service Center, BM-SC, or an E-mail server; and the service bearer network is an IP Multimedia Sub-system, IMS, a SIP network, an H.323 network, an IP network, an Asynchronous Transfer Mode, ATM, network, a Multi-Protocol Label Switching, MPLS, network or a Synchronous Digital Hierarchy, SDH, network.

As can be seen from the above solutions, a general service management entity is set in the network, and the client uses the general service management entity to carry the application service provided by the AS. The client sends an operation request to the general service management entity according to its supported service protocol upon initiating the service operation with the AS (i.e. an operation request corresponding to the service protocol supported by the client), and the general service management entity performs a service operation with the AS according to the service protocol supported by the AS (i.e. the operation request corresponding to the service protocol supported by the AS). If the AS initiates a service operation with the client, the AS sends an operation request to the general service management entity according to its supported service protocol, and the general service management entity performs the service operation with the client according to the service protocol supported by the client.

Therefore, according to the method and system provided by the present invention for performing an application service, the relevant relation between the client and the application service provided by the AS need not be considered when the application service is performed. Both the client supporting the general service protocol and the client supporting a specific application service protocol can access ASs of various application services through a uniform platform such as the general service management entity. In this way, only the general service management entity of the network needs to be modified while various application services are developed, and the clients of numerous users can keep unchanged. The cost of developing application services by the client is greatly reduced. Because a user need not use a new client or perform software upgrade for the existing client, it is easier for the user to accept a new application service, thus expediting the deployment process of application services greatly.

### Brief Description of the Drawings

Figure 1 is a schematic diagram illustrating a structure of a system in accordance with an embodiment of the present invention.
Figure 2 is a schematic diagram illustrating a structure of various entity protocol stacks in a system in accordance with an embodiment of the present invention.
Figure 3 is a schematic diagram illustrating a process of a method in accordance with an embodiment of the present invention.

### Detailed Description of the Invention

An embodiment of the present invention provides a system for performing an application service. The system is a system further including a general service management entity in the existing application service system including a client and an AS, and the general service management entity is set in the network side. In the system, a service protocol supported by the client is irrelevant to that supported by the AS, i.e. the service protocol supported by the client may match or not match the service protocol supported by the AS. Further, the client may use the general service management entity to carry the service application supported by the AS.

The general service management entity includes: a general service access management unit and a client protocol processing unit. The client is operable for sending an operation request to the general service access management unit according to a service protocol supported by the client itself. The general service access management unit is operable for invoking a function of the client protocol processing unit according to the operation request from the client through sending an invoking command, receiving an invoking command from the client protocol processing unit and sending an operation request to the client according to the service protocol supported by the client. The client protocol processing unit is operable for receiving the invoking command from the general service access management unit, sending an operation request to the AS according to the service protocol supported by the AS, receiving an operation request from the AS and sending an invoking command to the general service access management unit.

In addition, the service bearer network where the AS is located may also perform the service operation with the client, for example, in the PoC service, the service bearer network where the PoC server is located is the IMS, and the PoC client may need to register in the IMS. Therefore, the system further includes the service bearer network where the AS is located. The service protocol supported by the client may be irrelevant to that supported by the service bearer network. If the invoking command from the general service access management unit instructs the client protocol processing unit to perform the service operation with the service bearer network, the client protocol processing unit may be further operable for sending an operation request to the service bearer network according to the service protocol supported by the service bearer network so as to perform the service operation with the service bearer network in place of the client. The client protocol processing unit may be further operable for receiving an operation command from the service bearer network and sending an invoking command to the general service access management unit. Thereby, the general service access management unit is able to send an operation request to the client to perform the service operation directly with the client in place of the service bearer network.

The general service management entity can further push service information or send an operation command to the client, or the AS or the service bearer network actively. Therefore, the client can also receive the service information or the operation command from the general service access management unit, obtain service notification information from the service information or send an operation request to the general service access management unit according to a service operation indication obtained from the service information. The client can update the service protocol and/or service capability supported by the client itself according to the indication of the operation command. The AS or service bearer network can receive the service information or the operation command from the client protocol processing unit, obtain service notification information from the service information or send an operation request to the client protocol processing unit according to a service operation indication obtained from the service information. The AS or service bearer network can then update the service protocol and/or service capability supported by the AS or service bearer network according to the indication of the operation command.

In the system of the present invention, there may be multiple ASs. If the ASs provide different application services, the ASs may therefore support different protocols. A user needs to access an AS using a service protocol corresponding to the AS so as to implement application services. In this case, the client protocol processing unit may include multiple client protocol processing modules, and each client protocol processing module connects to one AS and supports the service protocol supported by the AS. Each client protocol processing module receives an invoking command from the general service access management unit, and sends, according to the service protocol supported by the client protocol processing module, an operation request to the AS and/or service bearer network connected to the client protocol processing module. The client protocol processing module further receives an operation request from the AS and/or service bearer network and sends an invoking command to the general service access management unit.

Because the service capability of a client may not match that of an AS, for example, the client has a text display capability while the AS has an audio providing capability, the general service management entity needs to convert the audio data from the AS into the text data and send the text data to the client; and needs to convert the text data from the client into the audio data and send the audio data to the AS. In this way, the system of the present invention may further include: a service data processing unit for receiving service data from the general service access management unit or the client protocol processing unit, and sending the service data to the client protocol processing unit or to the general service access management unit upon converting the service data. The client protocol processing unit may be further operable for receiving the service data from the service data processing unit and forwarding the service data to the AS. The general service access management unit may be further operable for receiving the service data from the service data processing unit and forwarding the service data to the client. The service data processing unit may be connected to multiple client protocol processing modules in the client protocol processing unit respectively so as to transmit the service data of different ASs.

With the system of the present invention, the client need not install client software of each application service when using various application services, i.e. the service protocol and the service capability supported by the client are irrelevant to the application service and the general service management entity provides client software for each client uniformly. Therefore, the client may initiate an application service through the general service management entity to any AS connected to the general service management entity, and any AS may also initiate an application service to the client through the general service management entity. Therefore, the operator may add a new AS to implement a new service on the network at will, and a user may access the new AS using the existing client without upgrading the client software.

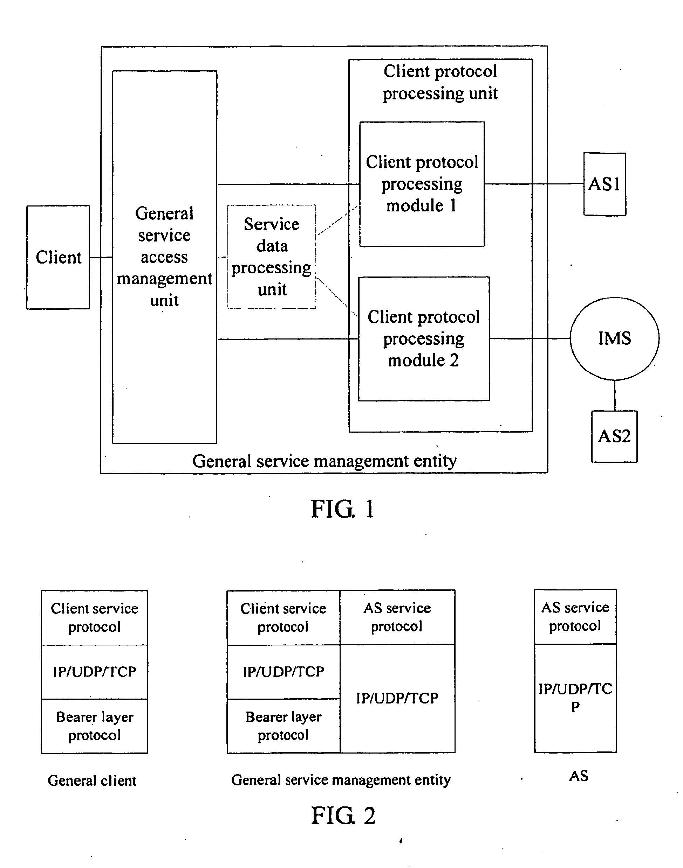

Figure 1 is a schematic diagram illustrating a structure of a system in accordance with an embodiment of the present invention. In this embodiment, the system includes two ASs AS1 and AS2. The AS1 is connected to client protocol processing module 1, and the AS2 is connected to client protocol processing module 2. The client protocol processing module 1 is connected to the general service access management unit and the service data processing unit respectively. Similarly the client protocol processing module 2 is connected to the general service access management unit and the service data processing unit respectively. The AS of the system of the present invention may be an AS of any application service, including an AS of IMS-based application service or an AS of non-IMS-based application service. The AS of IMS-based application service is connected to the general service management entity through the IMS, and the AS of non-IMS-based application service can be directly connected to the general service management entity. As shown in Figure 1, the AS1 is the AS of non-IMS-based application service and is connected to the client protocol processing module 1 directly; the AS2 is the AS of IMS-based application service and is connected to the client protocol processing module 2 through the IMS. The system of the present invention will be hereinafter described with reference to Figure 1.

When a client is to use an application service, the client sends a logon request to the general service access management unit to set up a connection with the general service access management unit, and implements a logon process to the general service access management unit. After the client logs on to the general service access management unit successfully, the general service access management unit pushes service information to the client, the service information indicating the client of various application services which the current system can provide. A user may send an operation request containing an application service indication to the general service access management unit so as to notify the general service access management unit of the application service corresponding to the current service operation. The general service access management unit replies the client with service information indicating registration indication information of the application service corresponding to the current service operation. Therefore, the user may input registration information through the client, and send again an operation request containing the registration information to the general service access management unit. The general service access management unit sends the registration information of the user to the client protocol processing module 1 or the client protocol processing module 2 using an invoking command. The client protocol processing module 1 or 2 constructs and sends an operation request containing the registration information of the user to the AS 1 or AS2 respectively according to the service protocol supported by the AS1 or AS2. Therefore, the general service management entity may perform the registration process of the user on the AS1 or AS2 in place of the client. The invoking command sent by the general service access management unit invokes a function corresponding to the current service registration operation in the client protocol processing module 1 or the client protocol processing module 2, and the function is operable for constructing an operation request for service registration. In this embodiment, the client sends an operation request according to the indication of the service information pushed by the general service access management unit. In practical applications, the general service access management unit may not push the service information to the client, and the client may directly send an operation request to the general service access management unit to request an operation with the AS or the service bearer network. Whether the service information should be pushed when an operation request is sent depends on the service protocol and the service capability supported by the client, which will not be limited in the present invention.

If the client wants to register in the IMS of the service bearer network of the AS2, the client may indicate the general service access management unit to register in the IMS by sending an operation command containing the registration information, so that the general service access management unit may send an invoking command to the client protocol processing module 2. The client protocol processing module 2 constructs and sends an operation request for service registration to the IMS, so as to perform the registration on the IMS in place of the client.

In addition, the client may implement other service operations with the AS, for example service setup, service termination and service notification, through the general service access management unit and the client protocol processing module. The principles for implementing other service operations are basically the same as that described above, and the differences are that: service information provided by the general service access management unit to the client are different, operation requests sent by the client to the general service access management unit are different, functions invoked by the general service access management unit when sending an invoking command to the client protocol processing module are different, and operation requests sent by the client protocol processing module are different. Therefore, the other service operations related to the system will not be further described in detail, but are within the protection scope of the present invention. The service information provided by the general service access management unit to the client may take the form of Web page, and is sent to the client by Hypertext Transfer Protocol (HTTP), so that a user may use the client to browse the Web site to learn various application services and registration indication information of the application services which can be provided currently.

After the client sets up a service successfully, the service data such as voice, text and video which should be transferred between the AS and the client may be transferred through the general service management entity. However, the client may only have a basic and general service capability, which may not match the service capability of the AS. For example, the client has only the text display capability while the AS has only the audio providing capability. In this case, the client can not receive the audio service data from the AS. At this point, the service data processing unit of the general service management entity should convert and send the service data from the client or the AS. For example, the service data processing unit converts the text service data from the client into the audio service data corresponding to the text content and sends the converted audio service data to the AS. The service data processing unit may be set independently in the general service management entity, or be integrated in the general service access management unit or in the client protocol processing unit.

Based on the above work principle of the system of the present invention, structures of various entity protocol stacks in the system in accordance with an embodiment of the present invention are shown in Figure 2. As shown in Figure 2, the protocol stack of the client from the bottom to the top includes a bearer layer protocol, an Internet Protocol (IP)/User Datagram Protocol (UDP)/Transport Control Protocol (TCP) and service protocol of the client. The protocol stack of the AS from the bottom to the top includes the IP/UDP/TCP protocol and the service protocol of the AS. In the protocol stack of the general service management entity, the protocol stack at the left part is the same as that of the client, including the bearer layer protocol, the IP/UDP/TCP protocol and the service protocol of the client from the bottom to the top; the protocol stack at the right part is the same as that of the AS, including the IP/UDP/TCP protocol and the service protocol of the AS from the bottom to the top.

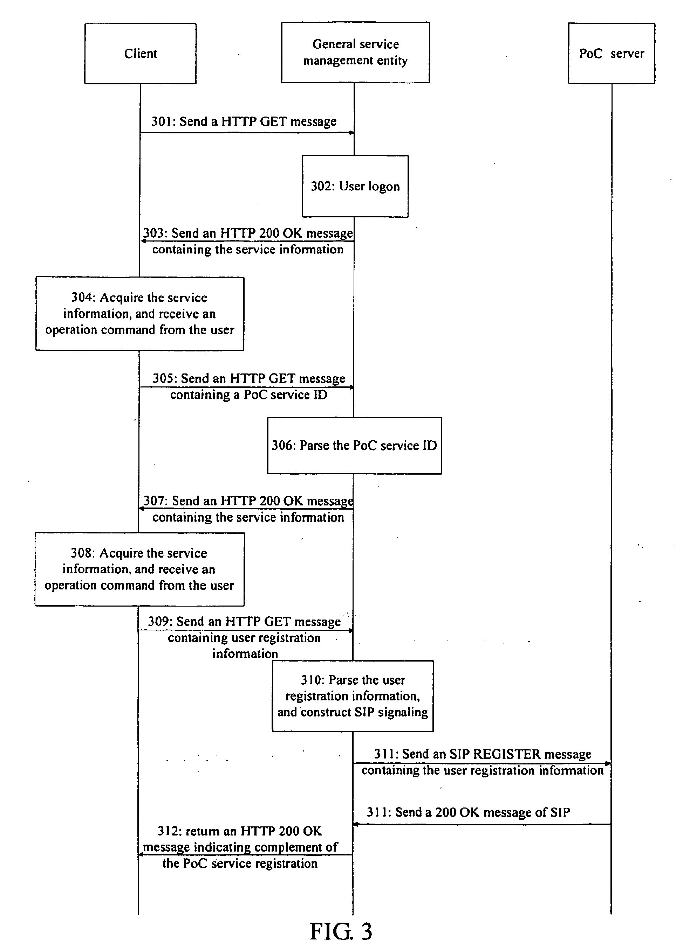

Based on the above system, embodiments of the present invention provide a method for performing application services. The method and the work principle of the system are hereinafter described in detail with reference to Figure 3.

Figure 3 is a schematic diagram illustrating a process of a method in accordance with an embodiment of the present invention. In this embodiment, the AS is a PoC server; the client is a general client and communicates with the general service management entity using a general protocol HTTP. In other words, the general service management entity is based on the Web technology, and the client may obtain the service information pushed by the general service management entity by browsing the Web site. Referring to Figure 3, the client may access a PoC service by browsing the Web site, and the access process is described below.

301: The client sends a logon request to the general service access management unit of the general service management entity. The logon request may be contained in an HTTP GET message.

302: The general service access management unit of the general service management entity processes the logon of the user according to the logon request in 301.

303: The general service access management unit sends to the client an HTTP 200 OK message containing service information.

304: The client obtains the service information from the HTTP 200 OK message in 303, i.e. obtains a user interface in the form of Web site. The service information indicates various application services that the system can provide, for example indicates that the current system can provide a PoC service and a Presence service. The user browses the Web site through the client to select an application service and sends an operation command to the client. The operation command contains an application service indication requested by the user, for example a service identifier.

305: The client parses the operation command of the user to obtain the application service indication, and sends an operation request containing the application service indication to the general service access management unit. The operation request may be contained in an HTTP GET message. In 305, it is supposed that the application service indication is the PoC service identifier.

306: The general service access management unit parses the HTTP GET message described in 305 to obtain the PoC service identifier, and determines that the client currently prepares to use a PoC service.

307: The general service access management unit sends to the client an HTTP 200 OK message containing service information.

308: The client obtains the service information from the HTTP 200 OK message described in 307. The service information indicates the registration indication information of the PoC service requested currently, for example, "please fill in username and password". The user browses the Web site and inputs the registration information through the client, so as to send an operation command containing the registration information to the client.

309: The client parses the operation command of the user to obtain the registration information, and sends an operation request indicating the service registration to the general service access management unit. The registration information is contained in the operation request, and the operation request may be contained in an HTTP GET message.

310: The general service access management unit parses the HTTP GET message described in 309 to obtain the registration information, and determines that the client currently prepares to register a PoC service. The general service access management unit sends an invoking command containing the registration information to a client protocol processing module corresponding to a PoC server, so as to invoke a function for constructing a service registration request in the client protocol processing module. The client protocol processing module constructs the service registration request containing the registration information. Because the PoC server is based on the SIP protocol, the service registration request is a REGISTER message of the SIP.

311: The client protocol processing module described in 310 sends to the PoC server the REGISTER message constructed by the client protocol processing module itself, and the REGISTER message contains the registration information. The PoC server performs the PoC service registration of the client according to the REGISTER message received, and sends a 200 OK message of the SIP to the client protocol processing module.

312: The client protocol processing module sends the 200 OK message of the SIP to the general service access management unit. The general service access management unit parses the 200 OK message and learns that the PoC service registration succeeds, and sends to the client an HTTP 200 OK message indicating that the PoC service registration is completed. Therefore, the total process for the client logging on to the general service management entity and performing the PoC service registration is completed.

The client may further send to the general service access management unit an HTTP-based operation request indicating setup of a PoC session. The general service access management unit sends an invoking command to invoke a function for constructing a PoC session setup request in the client protocol processing module. Therefore, the client protocol processing module may send an INVITE message of the SIP to the PoC server in place of the client, and set up a PoC session with the PoC server. The client may also send an HTTP-based operation request indicating termination of a PoC session to the general service access management unit. The general service access management unit sends an invoking command to invoke a function for constructing a PoC session termination request in the client protocol processing module. Therefore, the client protocol processing module may send a BYE message of the SIP to the PoC server in place of the client and terminate the PoC session with the PoC server. The PoC server may also send a service notification request to the client protocol processing module, and the service notification request may be a SIP Notify message. The client protocol processing module may send an invoking command to the general service access management unit to invoke a function for constructing a service notification request in the general service access management unit. Therefore, the general service access management unit may send an HTTP 200 OK message containing notification information to the client in place of the PoC server, and issue the notification to the client. In the above various service operations, the client protocol processing module may also send an HTTP 200 OK message to notify the client that the PoC session is set up successfully or that the PoC session is terminated successfully; or send a 200 OK message of the SIP to notify the PoC server that the notification information push succeeds through the general service access management unit. Therefore, in the above service operations, though the HTTP protocol supported by the client does not match the SIP protocol supported by the PoC server, the client may use a PoC service through the general service management entity just like a PoC client.

The above principles for setting up a PoC session and the principles for performing other service operations are substantially the same as principle of the PoC service registration described in 308 to 312, except that messages transmitted between various entities are different. Therefore, the description will not be given to various service operations, but they are within the protection scope of the present invention. In addition, Figure 3 shows the process for the client initiating a PoC service operation; the processing principle for the PoC server actively initiating a PoC service operation to the client is similar to the process shown in Figure 3 and is just the reverse process of the process shown in Figure 3. More particularly, the PoC server sends an operation request of the SIP to the client protocol processing unit; the client protocol processing unit parses the operation request and sends an invoking command to the general service access management unit; the general service access management unit sends to the client an operation request of the HTTP containing service information indicating the client that there is an operation request from the PoC server. The client may involve the current service operation according to the indication of the service information. The process for the PoC server initiating a service operation will not be further described in detail in this disclosure.

In addition, the client may need to perform some service operations with the IMS where the PoC server is located. For example, the client needs to register in the IMS or the IMS sends a service notification to the client. The principle for the client performing various service operations with the IMS is similar to the principle for the client performing various service operations with the PoC server. The detailed flow chart may be similar to the flow chart shown in Figure 3, except that the PoC server shown in Figure 3 should be replaced by the IMS. Therefore, the process for the client performing service operations with the IMS will not be further described in detail, but is within the protection scope of the present invention.

In the above embodiment, the PoC service can be implemented between the client and the PoC server. The method and system of the present invention can implement not only the PoC service, but also other services such as a Presence service. Therefore, the AS of the present invention may be a Presence server, a Conference server, an XML Document Management (XDM) server, a Streaming server, an Instant Messaging (IM) server, a Broadcast Multicast Service Center (BM-SC) or an E-mail server. The service bearer network may be an IP Multimedia Sub-system (IMS), a SIP network, an H.323 network, an IP network, an Asynchronous Transfer Mode (ATM) network, a Multi-Protocol Label Switching (MPLS) network or a Synchronous .Digital Hierarchy (SDH) network. However, the service protocol supported by the client may not match that supported by the AS or the service bearer network. For example, the service protocol supported by the AS or the service bearer network is the SIP or H.323 protocol, while the service protocol supported by the client is the HTTP, the Wireless Application Protocol (WAP) or a private protocol specified by an operator. In another case, the client supports a service protocol partially matching that supported by the AS or the service bearer network. For example, the client supports an SIP protocol while the AS supports an extended SIP protocol, and the AS may identify a portion of the operation request from the client, but for the other portion of the operation request, the general service management entity needs to provide a service protocol support function so as to construct an SIP operation request supported by the AS and send the SIP operation request to the AS. Therefore, the method may further include the following process.

The general service management entity obtains a service protocol supported by each client. Upon receiving an operation request from the AS or the service bearer network, or from the client, the general service management entity determines whether the service protocol supported by the client matches that supported by the AS or the service bearer network according to the service protocol supported by the client. If the result of determination is yes, the general service management entity forwards the operation request to the client directly, or forwards the operation request to the AS or the service bearer network directly. Otherwise, the general service management entity provides a service protocol support function according to the service protocol supported by the client, or according to the service protocol supported by the AS or the service bearer network; constructs and sends a new operation request to the client according to the service protocol supported by the client, or constructs and sends a new operation request to the AS or the service bearer network according to the service protocol supported by the AS or the service bearer network. There are many manners for the general service management entity to obtain the service protocol supported by the client. In a first manner, the service protocol supported by each client is preset in the general service management entity. In a second manner, the client sends the service protocol information supported by the client itself to the general service management entity actively, for example, the client sends a logon request containing the service protocol information to the general service management entity when logging on to the general service management entity. In a third manner, the client sends an operation command containing the service protocol information supported by the client itself to the general service management entity according to the service information indication pushed by the general service management entity. For example, after a client logs on to the general service management entity, the general service management entity indicates, in the Web site pushed to the client, a service protocol support function that the general service management entity can provide, such as video conversion, audio conversion and text conversion; the client configures the service protocol supported by itself through browsing the Web site, and sends an operation command containing the service protocol information to the general service management entity. Therefore, the general service management entity may obtain the service protocol supported by the client and the service protocol support function needed according to the operation command.

As can be seen from the above, the general service management entity can provide the client with a service protocol support function according to the service protocol supported by the client. For example, the client supports part of IMS-based SIP protocol; the general service management entity may know which service protocol support capability the client lacks according to the service protocol supported by the client, so as to provide the client with a service protocol support function according to the service protocol support capability that the client lacks. Therefore, the general service management entity may assist clients of various service protocol support capabilities to perform various application services flexibly.

In addition, the service capability of the client is irrelevant to that of the AS or the service bearer network, and may match or not match the service capability of the AS or the service bearer network. The service capability of the client includes at least one of text display capability, text operating capability, picture/cartoon display capability, picture/cartoon editing and generating capability, audio playing capability, audio collection capability, video playing capability, and video collection capability. The service capability of the AS or the service bearer network includes at least one of text providing capability, picture/cartoon providing capability, audio playing capability, audio collection capability, video playing capability, and video collection capability. That the service capability of the client matches that of the AS or the service bearer network includes the following two cases. One is that the service capability of the client has a corresponding item with the service capability of the AS or the service bearer network, for example, the audio collection capability of the client is an item corresponding to the audio playing capability of the AS. The other is that the service protocol supported by the client has the same item with that supported by the AS or the service bearer network. That the service capability of the client does not match that of the AS or the service bearer network includes: the service capability of the client having no corresponding item with that of the AS or the service bearer network, for example, the client supports text display capability but no audio collection capability while the AS supports audio playing capability but no text providing capability; or the service protocol supported by the client having no the same item with that supported by the AS or the service bearer network.

Therefore, in the method of the present invention, the general service management entity further obtains service capabilities of sender client and receiver client of service data respectively. Upon receiving the service data from the AS or the service bearer network, or upon receiving the service data from the sender client, the general service management entity determines whether the service capability of the sender client matches that of the receiver client or whether the service capability of the sender client matches that of the AS or the service bearer network according to the service capabilities of the sender client or the receiver client. If the result of determination is yes, the general service management entity forwards the service data to the receiver client directly, or forwards the service data to the AS or the service bearer network directly. Otherwise, the general service management entity provides a service capability support function according to the service capability of the receiver client, or according to the AS or the service bearer network; converts the service data received, and sends the converted service data to the receiver client, or to the AS or the service bearer network.

There are many manners for the general service management entity to obtain the service capabilities of the sender client and the receiver client. In a first manner, service capability information of each client is preset in the general service management entity. In a second manner, the client sends its own service capability information to the general service management entity actively. For example the client sends to the general service management entity a logon request containing the service capability information when logging on to the general service management entity. In a third manner, the client sends an operation command containing its own service capability information to the general service management entity according to the service information indication pushed by the general service management entity. For example, after a client logs on to the general service management entity, the general service management entity indicates, in the Web site pushed to the client, a service capability support function that the general service management entity can provide, such as video conversion, audio conversion and text conversion. The client configures its own service capability such as text display capability and selects a service capability support function needed such as audio conversion through browsing the Web site. Therefore, the client sends an operation command containing the service capability information to the general service management entity, and the general service management entity can obtain the service capability of the client and the service capability support function needed according to the operation command. In this embodiment, the service data are transmitted between the client and the AS or between the client and the service bearer network, or between clients. As can be seen, the general service management entity may provide the client with a service capability support function according to the current service capability of the client. For example, the client has part of PoC service capabilities, the general service management entity may know which PoC service capabilities the client lacks according to the service capability of the client obtained, so as to provide the client with a service capability support function of the PoC according to the service capabilities which the client lacks. Therefore, the general service management entity of the present invention may assist a client to perform various application services flexibly according to various service capabilities of the client.

As is well known, the service protocol should include two aspects: a service control layer protocol and a service bearer layer protocol. That the service protocols have the same item means that the service control layer protocols have the same item and the service bearer layer protocols also have the same item. That the service protocols have no identical item means that the service control layer protocols or the service bearer layer protocols have no identical item. The service control layer protocol supported by the client, or by the AS or the service bearer network includes at least one of the SIP, the H.323 protocol, the HTTP and the Wireless Application Protocol (WAP). In addition, the service bearer layer protocol includes the service data codec format and the service data encapsulation protocol. The service data encapsulation protocol supported by the client or by the AS or the service bearer network includes Real-time Transport Protocol (RTP) and/or Internet Protocol (IP). The service data codec format supported by the client or by the AS or the service bearer network includes at least one of REAL VIDEO format, Advanced System Format (ASF), Audio/Video Inserted (AVI) format, Moving Pictures Experts Group 1 (MPEG 1) format, MPEG 2 format, MPEG 4 format, UNICODE format and Adaptive MultiRate (AMR) format.

To sum up, according to the present invention, while using an application service, the client need not consider whether the service protocol and service capability supported by the client itself matches that supported by the AS; and the general service management entity added in the present invention can communicate with the AS in place of the client. Therefore, the client is able to select various ASs to implement application services flexibly through the general service management entity as long as the client supports the basic and general service protocols and has the basic service capability.

According to the method of the present invention, the general service management entity may issue service information to the client or to the AS or the service bearer network actively so as to implement centralized management for each client, AS and service bearer network. The service information may include a service notification of the system, or information indicating the preparation of updating the service protocol or service capability. Therefore, the client, the AS or the service bearer network may obtain information of the service notification from the service information, or send an operation request to the general service management entity to initiate the service operation process between the client and the AS, or between the client and service bearer network, or between clients. The general service management entity may also issue an operation command to each client, AS or service bearer network actively to update the service capability and the service protocol supported by each client, AS or service bearer network, i.e. perform the software upgrade for each client, AS or service bearer network.

If the service protocol of the AS or the service bearer network in the system is updated, for example, if the software or hardware is upgraded, or if an AS or service bearer network is added to the system or removed from the system, the general service management entity may modify the service protocol supported by the general service management entity itself to guarantee that the service protocol supported by the general service management entity is consistent with that supported by the AS connected to the general service management entity and the service bearer network connected to the general service management entity. But the client need not be processed and the service protocol of the client keeps unchanged. Certainly, for some clients, the general service management entity may send operation commands to the clients to update the service protocols of the clients, or may push the service information indicating updating service protocols to the clients to indicate that the service protocols of the clients need to be updated. The process of sending an operation command to the client to update the service protocol of the client may be performed at the same time with the process of the general service management entity updating the service protocol of the general service management entity, or be performed before or after the process of the general service management entity updating the service protocol of the general service management entity, which will not be limited in the present invention.

Similarly, if the service capability of the AS or the service bearer network is updated, for example the software and hardware are upgraded, the general service management entity may modify the service capability support function of the general service management entity, so that the general service management entity can convert the service data between the client and the AS or between the client and the service bearer network without processing the client, and the service capability of the client keeps unchanged. Certainly, for some clients, the general service management entity may send operation commands to the clients to update the service capabilities of the clients. Or, the general service management entity may push the service information indicating update of service capabilities to the clients to indicate that the service capabilities of the clients need to be updated. The process of sending an operation command to the client to update the service capability of the client may be performed at the same time with the process of the general service management entity updating the service capability support function of the general service management entity, or be performed before or after the process of the general service management entity updating the service capability support function of the general service management entity, which will not be limited in the present invention.

To sum up, according to the system and method of the present invention, a client having various service capabilities and supporting various service protocols is able to freely select an application service to be performed, and a user need not worry about the supporting capability of the client when using an application service. In addition, the service capability support function provided by the general service management entity enables the client supporting a service protocol of application service to access other application servers to implement other application services through the support of the general service management entity. Because the client of the user is not limited in a specific application service any more, various application services may be widely extended without bringing troubles of usage to users.

The foregoing descriptions are only preferred embodiments of the present invention and are not for use in limiting the protection scope thereof. Any modification, equivalent replacement or improvement made under the principles of the present invention should be included in the protection scope of the present invention.

## Claims

1. A method for performing an application service, the method applying to a system comprising a first party, a second party and a general service management entity, and the method comprising:
receiving (305), by the general service management entity, an operation command containing an application service indication from the first party;
parsing (306), by the general service management entity, the operation command to obtain the application service indication and determining (306) an application service requested by the first party;
sending (307), by the general service management entity, a message containing service information to the first party, wherein the service information indicates that the first party is required to enter requested registration information to enable the first party to use the application service (308);receiving (309), by the general service management entity, a first operation request containing the registration information which is sent by the first party corresponding to a service protocol supported by the first party;
parsing (310), by the general service management entity, the first operation request to obtain the registration information, and constructing a second operation request containing the registration information according to the service protocol supported by the second party;
sending (311), by the general service management entity, the second operation request to the second party for performing the service registration of the first party;
wherein
the first party is a client, and the second party is an Application Server, AS, or a service bearer network where an AS is located.

2. The method according to claim 1, further comprising:
receiving (311), by the general service management entity, an operation response from the second party after the second party performs the service registration of the first party according to the second operation; and
parsing (312), by the general service management entity, the operation response to obtain a response indication, and constructing and sending (312) an operation response to the first party according to the response indication and the service protocol supported by the first party.

3. The method of Claim 1, further comprising:
upon receiving the first operation request, determining whether the service protocol supported by the first party matches the service protocol supported by the second party;
if the result of the determination is yes, forwarding the first operation request to the second party directly;
otherwise, providing a service protocol support function according to the service protocol supported by the second party, constructing and sending a second operation request to the second party according to the service protocol supported by the second party.

4. The method of Claim 1, further comprising:
obtaining, by the general service management entity, a service capability of a sender client of service data and a service capability of a receiver client of service data;
upon receiving the service data from the sender client, determining, by the general service management entity, whether the service capability of the sender client matches the service capability of the receiver client, or whether the service capability of the sender client matches a service capability of the AS or the service bearer network;
if the result of the determination is yes, forwarding the service data to the receiver client, or the AS or the service bearer network correspondingly;
otherwise, providing a service capability support function according to the service capability of the receiver client, or according to the service capability of the AS or the service bearer network, converting the service data and sending the converted service data to the receiver client, or the AS or the service bearer network correspondingly.

5. The method of Claim 4, further comprising:
if the service capability of the AS or the service bearer network is updated, updating, by the general service management entity, the service capability support function of the general service management entity; and
performing, by the general service management entity, no processing for the client; or sending an operation command to the client to update the service capability of the client; or pushing service information indicating update of the service capability to the client.

6. The method of Claim 4, wherein the obtaining the service capability of the client comprises:
obtaining the service capability of the client from client service capability information set in advance; or
receiving service capability information sent by the client; or
receiving an operation command which is sent by the client according to an indication of service information pushed by the general service management entity and contains service capability information of the client.

7. The method of Claim 4, wherein the service capability of the sender client matches the service capability of the receiver client or matches the service capability of the AS or the service bearer network if:
the service capability of the sender client has a corresponding item with the service capability of the receiver client, or the service capability of the sender client has a corresponding item with the service capability of the AS or the service capability of the service bearer network correspondingly; and if a service protocol supported by the sender client has an identical item with a service protocol supported by the receiver client, or with the service protocol supported by the AS or the service bearer network correspondingly.

8. The method of Claim 7, wherein if the service protocol is a service control layer protocol, the service control layer protocol supported by the client, or supported by the AS or the service bearer network comprises at least one of: Session Initiation Protocol, SIP, H.323 protocol, Hypertext Transfer Protocol, HTTP, and Wireless Application Protocol, WAP.

9. The method of Claim 7, wherein if the service protocol is a service bearer layer protocol, the service bearer layer protocol comprises: service data codec format and service data encapsulation protocol;
the sender client, or the receiver client, or the AS or the service bearer network supports a service data encapsulation protocol comprising: Real-time Transport Protocol, RTP, and/or Internet Protocol, IP;
the service data codec format supported by the sender client, or the receiver client, or the AS or the service bearer network comprises at least one of: a REAL VIDEO format, an Advanced System Format, ASF, an Audio/Video Inserted, AVI format, a Moving Pictures Experts Group 1, MPEG 1, format, an MPEG 2 format, an MPEG 4 format, a UNICODE format and an Adaptive Multi-Rate, AMR, format.

10. The method of Claim 1, further comprising:
pushing service information or sending an operation command, by the general service management entity, to the first party actively; initiating, by the first party, the service operation with the second party according to the service information from the general service management entity, or obtaining service notification information from the service information; updating, by the first party, the service protocol and/or service capability which are supported by the first party according to the operation command from the general service management entity; or
pushing service information or sending an operation command, by the general service management entity, to the second party actively; initiating, by the second party, the service operation with the first party according to the service information from the general service management entity, or obtaining service notification information from the service information; updating, by the second party, the service protocol and/or service capability which are supported by the second party according to the operation command from the general service management entity.

11. The method of Claim 1, further comprising:
receiving a logon request from the first party.

12. The method of Claim 1, further comprising:
if the AS or the service bearer network is added or removed, or if the service protocol supported by the AS or the service bearer network is updated, updating, by the general service management entity, a service protocol supported by the general service management entity itself; and
performing, by the general service management entity, no processing for the client; or sending an operation command to the client to update the service protocol supported by the client; or pushing service information indicating update of the service protocol to the client.

13. The method of Claim 1, wherein the client supports at least one service protocol; there is at least one AS, and each AS supports at least one service protocol; there is at least one service bearer network, and each service bearer network supports one or more service protocols; the general service management entity supports service protocols supported by the at least one AS and the at least one service bearer network;
the general service management entity determines the AS or the service bearer network which performs the service operation with the client according to the first operation request from the client, and determines the service protocol supported by the AS or the service bearer network, and performs the service operation with the AS or the service bearer network determined according to the service protocol determined.

14. The method of any of Claims 1-13, wherein the AS is a Push-to-Talk over Cellular, PoC, server, a Presence server, an XML Document Management, XDM, server, a Streaming server, an Instant Messaging, IM, server, a Broadcast Multicast Service Center, BM-SC, or an E-mail server;
the service bearer network is an IP Multimedia Sub-system, IMS, a SIP network, an H.323 network, an IP network, an Asynchronous Transfer Mode, ATM, network, a Multi-Protocol Label Switching, MPLS, network or a Synchronous Digital Hierarchy, SDH, network.

15. A general service management entity, configured between a first party and a second party, comprising one or more components operable for:
receiving, by the general service management entity, an operation command containing an application service indication from the first party;
parsing, by the general service management entity, the operation command to obtain the application service indication and determining (306) an application service requested by the first party;
sending, by the general service management entity, a message containing service information to the first party, wherein the service information indicates that the first party is required to enter requested registration information to enable the first party to use the application service (308);
receiving, by the general service management entity, a first operation request containing the registration information which is sent by the first party corresponding to a service protocol supported by the first party;
parsing, by the general service management entity, the first operation request to obtain the registration information, and constructing a second operation request containing the registration information according to the service protocol supported by the second party;
sending, by the general service management entity, the second operation request to the second party for performing the service registration of the first party;
wherein
the first party is a client, and the second party is an Application Server, AS, or a service bearer network where an AS is located.

16. The entity of Claim 15, wherein the one or more components are further operable for:
upon receiving the first operation request, determining whether the service protocol supported by the first party matches the service protocol supported by the second party;
if the result of the determination is yes, forwarding the first operation request to the second party directly;
otherwise, providing a service protocol support function according to the service protocol supported by the second party, constructing and sending a second operation request to the second party according to the service protocol supported by the second party.

17. The entity of Claim 15, wherein the one or more components comprise:
a general service access management unit, operable for receiving the first operation request from the client and sending a first invoking command to a client protocol processing unit; receiving a second invoking command from the client protocol processing unit and sending a fourth operation request to the client corresponding to a service protocol supported by the client; and
the client protocol processing unit, operable for receiving the first invoking command from the general service access management unit, sending a second operation request to the AS or the service bearer network corresponding to a service protocol supported by the AS or the service bearer network; receiving a third operation request from the AS or the service bearer network and sending the second invoking command to the general service access management unit.

18. The entity of Claim 17, wherein the client protocol processing unit comprise at least one client protocol processing module, and each client protocol processing module is connected to one AS and/or one service bearer network, and supports the service protocol supported by the AS and/or the service bearer network;
each client protocol processing module is operable for receiving the first invoking command from the general service access management unit, sending the second operation request to the AS connected to the client protocol processing module and/or the service bearer network connected to the client protocol processing module according to the service protocol supported by the client protocol processing module; and receiving the third service operation request from the AS or the service bearer network and sending the second invoking command to the general service access management unit.

19. The entity of Claim 17, wherein the one or more components further comprise a service data processing unit, operable for receiving service data from the service access management unit, sending the service data to the client protocol processing unit upon converting the service data; receiving service data from the client protocol processing unit, sending the service data to the general service access management unit upon converting the service data.

20. The entity of Claim 17, wherein the general service access management unit is further operable for sending first service information to the client; and
the client protocol processing module is further operable for sending second service information to the AS or the service bearer network.

21. The entity of Claim 17, wherein the general service access management unit is further operable for sending a first operation command to the client to update the service protocol supported by the client according to the first operation command; and
the client protocol processing module is further operable for sending a second operation command to the AS or service bearer network to update the service protocol supported by the AS or the service bearer network according to the second operation command.

22. A system for performing an application service, comprising a first party, a second party, and a general service management entity of any of Claims 15-20, wherein
the first party is a client, and the second party is an Application Server, AS, or a service bearer network where an AS is located;

23. The system of Claim 22, wherein there is at least one AS and/or at least one service bearer network; each AS or service bearer network supports at least one service protocol;
the general service management entity supports service protocols supported by the at least one AS and the at least one service bearer network.

24. The system of claim 22 or 23, wherein the AS is a Push-to-Talk over Cellular, PoC, server, a Presence server, an XML Document Management, XDM, server, a Streaming server, an Instant Messaging, IM, server, a Broadcast Multicast Service Center, BM-SC, or an E-mail server;
the service bearer network is an IP Multimedia Sub-system, IMS, a SIP network, an H.323 network, an IP network, an Asynchronous Transfer Mode, ATM, network, a Multi-Protocol Label Switching, MPLS, network or a Synchronous Digital Hierarchy, SDH, network.

## Patentansprüche

1. Verfahren zum Ausführen eines Anwendungsdienstes, wobei das Verfahren für ein System gilt, das einen ersten Teilnehmer, einen zweiten Teilnehmer und eine allgemeine Dienstverwaltungsentität umfasst, und das Verfahren die folgenden Schritte umfasst:
Empfangen (305) eines Operationsbefehls durch die allgemeine Dienstverwaltungsentität, der eine Anwendungsdienstindikation enthält, von dem ersten Teilnehmer;
Parsen (306) des Operationsbefehls durch die allgemeine Dienstverwaltungsentität, um die Anwendungsdienstindikation zu erhalten, und Bestimmen (306) eines von dem ersten Teilnehmer angeforderten Anwendungsdienstes;
Senden (307) einer Dienstinformationen enthaltenden Nachricht durch die allgemeine Dienstverwaltungsentität zu dem ersten Teilnehmer, wobei die Dienstinformationen angeben, dass der erste Teilnehmer angeforderte Registrationsinformationen eingeben muss, um es dem ersten Teilnehmer zu ermöglichen, den Anwendungsdienst zu benutzen (308); Empfangen (309) einer ersten Operationsanforderung durch die allgemeine Dienstverwaltungsentität, die die Registrationsinformationen enthält, die von dem ersten Teilnehmer gesendet werden, entsprechend einem von dem ersten Teilnehmer unterstützten Dienstprotokoll;
Parsen (310) der ersten Operationsanforderung durch die allgemeine Dienstverwaltungsentität, um die Registrationsinformationen zu erhalten, und Konstruieren einer zweiten Operationsanforderung, die die Registrationsinformationen enthält, gemäß dem von dem zweiten Teilnehmer unterstützten Dienstprotokoll;
Senden (311) der zweiten Operationsanforderung zu dem zweiten Teilnehmer durch die allgemeine Dienstverwaltungsentität, um die Dienstregistration des ersten Teilnehmers auszuführen;
wobei
der erste Teilnehmer ein Client ist und der zweite Teilnehmer ein Application Server AS oder ein Dienstträgernetz, in dem sich ein AS befindet, ist.

2. Verfahren nach Anspruch 1, ferner mit den folgenden Schritten:
Empfangen (311) einer Operationsantwort von dem zweiten Teilnehmer durch die allgemeine Dienstverwaltungsentität, nachdem der zweite Teilnehmer die Dienstregistration des ersten Teilnehmers gemäß der zweiten Operation ausführt; und
Parsen (312) der Operationsantwort durch die allgemeine Dienstverwaltungsentität, um eine Antwortindikation zu erhalten, und Konstruieren und Senden (312) einer Operationsantwort an den ersten Teilnehmer gemäß der Antwortindikation und dem von dem ersten Teilnehmer unterstützten Dienstprotokoll.

3. Verfahren nach Anspruch 1, ferner mit den folgenden Schritten:
Bestimmen, ob das von dem ersten Teilnehmer unterstützte Dienstprotokoll mit dem von dem zweiten Teilnehmer unterstützten Dienstprotokoll übereinstimmt, beim Empfang der ersten Operationsanforderung;
wenn das Ergebnis der Bestimmung Ja ist, direktes Weiterleiten der ersten Operationsanforderung zu dem zweiten Teilnehmer;
andernfalls Bereitstellen einer Dienstprotokoll-Unterstützungsfunktion gemäß dem von dem zweiten Teilnehmer unterstützten Dienstprotokoll, Konstruieren und Senden einer zweiten Operationsanforderung zu dem zweiten Teilnehmer gemäß dem von dem zweiten Teilnehmer unterstützten Dienstprotokoll.

4. Verfahren nach Anspruch 1, ferner mit den folgenden Schritten:
Erhalten einer Dienstfähigkeit eines Absender-Client von Dienstdaten und einer Dienstfähigkeit eines Empfänger-Client von Dienstdaten durch die allgemeine Dienstverwaltungsentität;
Bestimmen durch die allgemeine Dienstverwaltungsentität beim Empfang der Dienstdaten von dem Absender-Client, ob die Dienstfähigkeit des Absender-Client mit der Dienstfähigkeit des Empfänger-Client übereinstimmt oder ob die Dienstfähigkeit des Absender-Client mit der Dienstfähigkeit des AS oder des Dienstträgernetzes übereinstimmt;
wenn das Ergebnis der Bestimmung Ja ist, Weiterleiten der Dienstdaten zu dem Empfänger-Client oder dem AS oder dem Dienstträgernetz auf entsprechende Weise;
andernfalls Bereitstellen einer Dienstfähigkeits-Unterstützungsfunktion gemäß der Dienstfähigkeit des Empfänger-Client oder gemäß der Dienstfähigkeit des AS oder des Dienstträgernetzes, Umsetzen der Dienstdaten und Senden der umgesetzten Dienstdaten zu dem Empfänger-Client oder dem AS oder dem Dienstträgernetz auf entsprechende Weise.

5. Verfahren nach Anspruch 4, ferner mit den folgenden Schritten:
wenn die Dienstfähigkeit des AS oder des Dienstträgernetzes aktualisiert wird, Aktualisieren der Dienstfähigkeits-Unterstützungsfunktion der allgemeinen Dienstverwaltungsentität durch die allgemeine Dienstverwaltungsentität; und
Ausführen keiner Verarbeitung für den Client durch die allgemeine Dienstverwaltungsentität; oder Senden eines Operationsbefehls zu dem Client, um die Dienstfähigkeit des Client zu aktualisieren; oder Pushen von Dienstinformationen, die eine Aktualisierung der Dienstfähigkeit angeben, zu dem Client.

6. Verfahren nach Anspruch 4, wobei das Erhalten der Dienstfähigkeit des Client Folgendes umfasst:
Erhalten der Dienstfähigkeit des Client aus im Voraus eingestellten Client-Dienstfähigkeitsinformationen; oder
Empfangen von durch den Client gesendeten Dienstfähigkeitsinformationen; oder
Empfangen eines Operationsbefehls, der durch den Client gesendet wird, gemäß einer durch die allgemeine Dienstverwaltungsentität gepushten Indikation von Dienstinformationen, und der Dienstfähigkeitsinformationen des Client enthält.

7. Verfahren nach Anspruch 4, wobei die Dienstfähigkeit des Absender-Client mit der Dienstfähigkeit des Empfänger-Client übereinstimmt oder mit der Dienstfähigkeit des AS oder dem Dienstträgernetz übereinstimmt, wenn
die Dienstfähigkeit des Absender-Client einen entsprechenden Posten mit der Dienstfähigkeit des Empfänger-Client aufweist oder die Dienstfähigkeit des Absender-Client einen entsprechenden Posten mit der Dienstfähigkeit des AS oder der Dienstfähigkeit des Dienstträgernetzes auf entsprechende Weise aufweist; und wenn ein von dem Absender-Client unterstütztes Dienstprotokoll einen identischen Posten mit einem von dem Empfänger-Client unterstützten Dienstprotokoll oder mit dem von dem AS oder dem Dienstträgernetz unterstützten Dienstprotokoll auf entsprechende Weise aufweist.

8. Verfahren nach Anspruch 7, wobei, wenn das Dienstprotokoll ein Dienststeuerschichtprotokoll ist, das Dienststeuerschichtprotokoll, das von dem Client unterstützt wird oder von dem AS oder dem Dienstträgernetz unterstützt wird, mindestens eine der folgenden Alternativen umfasst: Session Initiation Protocol SIP, H.323-Protokoll, Hypertext Transfer Protocol HTTP und Wireless Application Protocol WAP.

9. Verfahren nach Anspruch 7, wobei, wenn das Dienstprotokoll ein Dienstträgerschichtprotokoll ist, das Dienstträgerschichtprotokoll Folgendes umfasst:
das Dienstdaten-Codec-Format und das Dienstdaten-Einkapselungsprotokoll;
der Absender-Client oder der Empfänger-Client oder der AS oder das Dienstträgernetz ein Dienstdaten-Einkapselungsprotokoll unterstützt, umfassend: Real-Time Transport Protocol RTP und/oder Internet-Protokoll IP;
das Dienstdaten-Codec-Format, das von dem Absender-Client oder dem Empfänger-Client oder dem AS oder dem Dienstträgernetz unterstützt wird, mindestens eines der folgenden Formate umfasst: REAL VIDEO, Advanced System Format ASF, Audio/Video Inserted AVI, Moving Pictures Experts Group 1, MPEG 1, MPEG 2, MPEG 4, UNICODE und Adaptive Multi-Rate AMR.

10. Verfahren nach Anspruch 1, ferner mit den folgenden Schritten:
Pushen von Dienstinformationen oder Senden eines Operationsbefehls durch die allgemeine Dienstverwaltungsentität zu dem ersten Teilnehmer auf aktive Weise; Einleiten der Dienstoperation mit dem zweiten Teilnehmer durch den ersten Teilnehmer gemäß den Dienstinformationen von der allgemeinen Dienstverwaltungsentität oder Erhalten von Dienstbenachrichtigungsinformationen aus den Dienstinformationen; Aktualisieren des Dienstprotokolls und/oder der Dienstfähigkeit, die durch den ersten Teilnehmer unterstützt werden, durch den ersten Teilnehmer gemäß dem Operationsbefehl von der allgemeinen Dienstverwaltungsentität; oder
Pushen von Dienstinformationen oder Senden eines Operationsbefehls durch die allgemeine Dienstverwaltungsentität zu dem zweiten Teilnehmer auf aktive Weise; Einleiten der Dienstoperation mit dem ersten Teilnehmer durch den zweiten Teilnehmer gemäß den Dienstinformationen von der allgemeinen Dienstverwaltungsentität oder Erhalten von Dienstbenachrichtigungsinformationen aus den Dienstinformationen; Aktualisieren des Dienstprotokolls und/oder der Dienstfähigkeit, die von dem zweiten Teilnehmer unterstützt werden, durch den zweiten Teilnehmer gemäß dem Operationsbefehl von der allgemeinen Dienstverwaltungsentität.

11. Verfahren nach Anspruch 1, ferner mit dem folgenden Schritt:
Empfangen einer Logon-Anforderung von dem ersten Teilnehmer.

12. Verfahren nach Anspruch 1, ferner mit den folgenden Schritten:
wenn der AS oder das Dienstträgernetz hinzugefügt oder entfernt werden oder wenn das von dem AS oder dem Dienstträgernetz unterstützte Dienstprotokoll aktualisiert wird, Aktualisieren eines von der allgemeinen Dienstverwaltungsentität selbst unterstützten Dienstprotokolls durch die allgemeine Dienstverwaltungsentität; und
Ausführen von keiner Verarbeitung für den Client durch die allgemeine Dienstverwaltungsentität; oder Senden eines Operationsbefehls zu dem Client, um das von dem Client unterstützte Dienstprotokoll zu aktualisieren; oder Pushen von Dienstinformationen, die eine Aktualisierung des Dienstprotokolls angeben, zu dem Client.

13. Verfahren nach Anspruch 1, wobei der Client mindestens ein Dienstprotokoll unterstützt; mindestens ein AS vorliegt und jeder AS mindestens ein Dienstprotokoll unterstützt; mindestens ein Dienstträgernetz vorliegt und jedes Dienstträgernetz ein oder mehrere Dienstprotokolle unterstützt; die allgemeine Dienstverwaltungsentität von dem mindestens einen AS und dem mindestens einen Dienstträgernetz unterstützte Dienstprotokolle unterstützt; und
die allgemeine Dienstverwaltungsentität den AS oder das Dienstträgernetz, der bzw. das die Dienstoperation mit dem Client ausführt, gemäß der ersten Operationsanforderung von dem Client bestimmt und das von dem AS oder dem Dienstträgernetz unterstützte Dienstprotokoll bestimmt und die Dienstoperation mit dem bestimmten AS oder Dienstträgernetz gemäß dem bestimmten Dienstprotokoll ausführt.

14. Verfahren nach einem der Ansprüche 1-13, wobei der AS ein Server für Push-to-Talk over Cellular PoC, ein Presence-Server, ein Server für XML Document Management XDM, ein Streaming-Server, ein Server für Instant Messaging IM, ein Server des Broadcast Multicast Service Center BM-SC oder ein E-Mail-Server ist;
das Dienstträgernetz ein IP Multimedia Sub-System IMS, ein SIP-Netz, ein H.323-Netz, ein IP-Netz, ein Netz des asynchronen Transfermodus ATM, ein Netz des Multi-Protocol Label Switching MPLS oder ein Netz der Synchronous Digital Hierarchy SDH ist.

15. Allgemeine Dienstverwaltungsentität, die zwischen einem ersten Teilnehmer und einem zweiten Teilnehmer konfiguriert ist und eine oder mehrere Komponenten umfasst, die für Folgendes betreibbar sind:
Empfangen eines Operationsbefehls durch die allgemeine Dienstverwaltungsentität, der eine Anwendungsdienstindikation enthält, von dem ersten Teilnehmer;
Parsen des Operationsbefehls durch die allgemeine Dienstverwaltungsentität, um die Anwendungsdienstindikation zu erhalten, und Bestimmen (306) eines von dem ersten Teilnehmer angeforderten Anwendungsdienstes;
Senden einer Dienstinformationen enthaltenden Nachricht durch die allgemeine Dienstverwaltungsentität zu dem ersten Teilnehmer, wobei die Dienstinformationen angeben, dass der erste Teilnehmer angeforderte Registrationsinformationen eingeben muss, um es dem ersten Teilnehmer zu ermöglichen, den Anwendungsdienst (308) zu benutzen;
Empfangen einer ersten Operationsanforderung durch die allgemeine Dienstverwaltungsentität, die die Registrationsinformationen enthält, die von dem ersten Teilnehmer gesendet werden, entsprechend einem von dem ersten Teilnehmer unterstützten Dienstprotokoll;
Parsen der ersten Operationsanforderung durch die allgemeine Dienstverwaltungsentität, um die Registrationsinformationen zu erhalten, und Konstruieren einer zweiten Operationsanforderung, die die Registrationsinformationen enthält, gemäß dem von dem zweiten Teilnehmer unterstützten Dienstprotokoll;
Senden der zweiten Operationsanforderung zu dem zweiten Teilnehmer durch die allgemeine Dienstverwaltungsentität, um die Dienstregistration des ersten Teilnehmers auszuführen;
wobei
der erste Teilnehmer ein Client ist und der zweite Teilnehmer ein Application Server AS oder ein Dienstträgernetz, in dem sich ein AS befindet, ist.

16. Entität nach Anspruch 15, wobei die eine oder die mehreren Komponenten ferner für Folgendes betreibbar sind:
Bestimmen, ob das von dem ersten Teilnehmer unterstützte Dienstprotokoll mit dem von dem zweiten Teilnehmer unterstützten Dienstprotokoll übereinstimmt, beim Empfang der ersten Operationsanforderung;
wenn das Ergebnis der Bestimmung Ja ist, direktes Weiterleiten der ersten Operationsanforderung zu dem zweiten Teilnehmer;
andernfalls Bereitstellen einer Dienstprotokoll-Unterstützungsfunktion gemäß dem von dem zweiten Teilnehmer unterstützten Dienstprotokoll, Konstruieren und Senden einer zweiten Operationsanforderung zu dem zweiten Teilnehmer gemäß dem von dem zweiten Teilnehmer unterstützten Dienstprotokoll.

17. Entität nach Anspruch 15, wobei die eine oder die mehreren Komponenten Folgendes umfassen:
eine allgemeine Dienstzugangsverwaltungseinheit, betreibbar zum Empfangen der ersten Operationsanforderung von dem Client und Senden eines ersten Aufrufbefehls zu einer Client-Protokollverarbeitungseinheit; Empfangen eines zweiten Aufrufbefehls von der Client-Protokollverarbeitungseinheit und Senden einer vierten Operationsanforderung zu dem Client entsprechend einem von dem Client unterstützten Dienstprotokoll; und
die Client-Protokollverarbeitungseinheit, betreibbar zum Empfangen des ersten Aufrufbefehls von der allgemeinen Dienstzugangsverwaltungseinheit, Senden einer zweiten Operationsanforderung zu dem AS oder dem Dienstträgernetz entsprechend einem von dem AS oder dem Dienstträgernetz unterstützten Dienstprotokoll; Empfangen einer dritten Operationsanforderung von dem AS oder dem Dienstträgernetz und Senden des zweiten Aufrufbefehls zu der allgemeinen Dienstzugangsverwaltungseinheit.

18. Entität nach Anspruch 17, wobei die Client-Protokollverarbeitungseinheit mindestens ein Client-Protokollverarbeitungsmodul umfasst und jedes Client-Protokollverarbeitungsmodul mit einem AS und/oder einem Dienstträgernetz verbunden ist und das von dem AS und/oder dem Dienstträgernetz unterstützte Dienstprotokoll unterstützt;
jedes Client-Protokollverarbeitungsmodul für Folgendes betreibbar ist: Empfangen des ersten Aufrufbefehls von der allgemeinen Dienstzugangsverwaltungseinheit, Senden der zweiten Operationsanforderung zu dem mit dem Client-Protokollverarbeitungsmodul verbundenen AS und/oder dem mit dem Client-Protokollverarbeitungsmodul verbundenen Dienstträgernetz gemäß dem von dem Client-Protokollverarbeitungsmodul unterstützten Dienstprotokoll; und Empfangen der dritten Dienstoperationsanforderung von dem AS oder dem Dienstträgernetz und Senden des zweiten Aufrufbefehls zu der allgemeinen Dienstzugangsverwaltungseinheit.

19. Entität nach Anspruch 17, wobei die eine oder die mehreren Komponenten ferner eine Dienstdatenverarbeitungseinheit umfassen, betreibbar zum Empfangen von Dienstdaten von der Dienstzugangsverwaltungseinheit, Senden der Dienstdaten zu der Client-Protokollverarbeitungseinheit auf die Umsetzung der Dienstdaten hin; Empfangen von Dienstdaten von der Client-Protokollverarbeitungseinheit und Senden der Dienstdaten zu der allgemeinen Dienstzugangsverwaltungseinheit auf die Umsetzung der Dienstdaten hin.

20. Entität nach Anspruch 17, wobei die allgemeine Dienstzugangsverwaltungseinheit ferner dafür betreibbar ist, erste Dienstinformationen zu dem Client zu senden; und
das Client-Protokollverarbeitungsmodul ferner dafür betreibbar ist, zweite Dienstinformationen zu dem AS oder dem Dienstträgernetz zu senden.

21. Entität nach Anspruch 17, wobei die allgemeine Dienstzugangsverwaltungseinheit ferner dafür betreibbar ist, einen ersten Operationsbefehl zu dem Client zu senden, um das von dem Client unterstützte Dienstprotokoll gemäß dem ersten Operationsbefehl zu aktualisieren; und
das Client-Protokollverarbeitungsmodul ferner dafür betreibbar ist, einen zweiten Operationsbefehl zu dem AS oder dem Dienstträgernetz zu senden, um das von dem AS oder dem Dienstträgernetz unterstützte Dienstprotokoll gemäß dem zweiten Operationsbefehl zu aktualisieren.

22. System zum Ausführen eines Anwendungsdienstes, das einen ersten Teilnehmer, einen zweiten Teilnehmer und eine allgemeine Dienstverwaltungsentität nach einem der Ansprüche 15-20 umfasst, wobei
der erste Teilnehmer ein Client ist und der zweite Teilnehmer ein Application Server AS oder ein Dienstträgernetz, in dem sich ein AS befindet, ist.

23. System nach Anspruch 22, wobei mindestens ein AS und/oder mindestens ein Dienstträgernetz vorliegen; und jeder AS oder jedes Dienstträgernetz mindestens ein Dienstprotokoll unterstützt; und
die allgemeine Dienstverwaltungsentität von dem mindestens einen AS und dem mindestens einen Dienstträgernetz unterstützte Dienstprotokolle unterstützt.

24. System nach Anspruch 22 oder 23, wobei der AS ein Server für Push-to-Talk over Cellular PoC, ein Presence-Server, ein Server für XML Document Management XDM, ein Streaming-Server, ein Server für Instant Messaging IM, ein Server des Broadcast Multicast Service Center BM-SC oder ein E-Mail-Server ist;
das Dienstträgernetz ein IP Multimedia Sub-System IMS, ein SIP-Netz, ein H.323-Netz, ein IP-Netz, ein Netz des asynchronen Transfermodus ATM, ein Netz des Multi-Protocol Label Switching MPLS oder ein Netz der Synchronous Digital Hierarchy SDH ist.

## Revendications

1. Procédé d'exécution d'un service d'application, le procédé s'appliquant à un système comprenant un premier correspondant, un second correspondant et une entité de gestion de service général, et le procédé comprenant :
la réception (305), par l'entité de gestion de service général, d'une commande d'opération contenant une indication de service d'application provenant du premier correspondant ;
l'analyse syntaxique (306), par l'entité de gestion de service général, de la commande d'opération afin d'obtenir l'indication de service d'application et la détermination (306) d'un service d'application demandé par le premier correspondant ;
l'envoi (307), par l'entité de gestion de service général, d'un message contenant des informations de service au premier correspondant, les informations de service indiquant que le premier correspondant doit entrer des informations d'enregistrement demandées pour pouvoir utiliser le service d'application (308) ; la réception (309), par l'entité de gestion de service général, d'une première demande d'opération contenant les informations d'enregistrement envoyées par le premier correspondant qui correspondent à un protocole de service supporté par le premier correspondant ;
l'analyse syntaxique (310), par l'entité de gestion de service général, de la première demande d'opération afin d'obtenir les informations d'enregistrement, et la construction d'une seconde demande d'opération contenant les informations d'enregistrement en fonction du protocole de service supporté par le second correspondant ;
l'envoi (311), par l'entité de gestion de service général, de la seconde demande d'opération au second correspondant pour exécuter l'enregistrement de service du premier correspondant;
dans lequel
le premier correspondant est un client, et le second correspondant est un Serveur d'Application, AS, ou un réseau support de service dans lequel se trouve un AS.

2. Procédé selon la revendication 1, comprenant en outre :
la réception (311), par l'entité de gestion de service général, d'une réponse d'opération depuis le second correspondant après que le second correspondant a exécuté l'enregistrement de service du premier correspondant en fonction de la seconde opération ; et
l'analyse syntaxique (312), par l'entité de gestion de service général, de la réponse d'opération afin d'obtenir une indication de réponse, et la construction et l'envoi (312) d'une réponse d'opération au premier correspondant en fonction de l'indication de réponse et du protocole de service supporté par le premier correspondant.

3. Procédé selon la revendication 1, comprenant en outre :
à la réception de la première demande d'opération, la détermination du fait que le protocole de service supporté par le premier correspondant correspond ou non au protocole de service supporté par le second correspondant ;
si le résultat de la détermination est oui, l'acheminement direct de la première demande d'opération au second correspondant ;
sinon, la fourniture d'une fonction de support de protocole de service en fonction du protocole de service supporté par le second correspondant, la construction et l'envoi d'une seconde demande d'opération au second correspondant en fonction du protocole de service supporté par le second correspondant.

4. Procédé selon la revendication 1, comprenant en outre:
l'obtention, par l'entité de gestion de service général, d'une capabilité de service d'un client expéditeur de données de service et d'une capabilité de service d'un client destinataire de données de service ;
à la réception des données de service depuis le client expéditeur, la détermination, par l'entité de gestion de service général, du fait que la capabilité de service du client expéditeur correspond ou non à la capabilité de service du client destinataire, ou du fait que la capabilité de service du client expéditeur correspond ou non à une capabilité de service de l'AS ou du réseau support de service ;
si le résultat de la détermination est oui, l'acheminement des données de service au client destinataire, ou à l'AS ou au réseau support de service comme il convient ;
sinon, la fourniture d'une fonction de support de capabilité de service en fonction de la capabilité de service du client destinataire, ou en fonction de la capabilité de service de l'AS ou du réseau support de service, la conversion des données de service et l'envoi des données de service converties au client destinataire, ou à l'AS ou au réseau support de service comme il convient.

5. Procédé selon la revendication 4, comprenant en outre :
si la capabilité de service de l'AS ou du réseau support de service est actualisée, l'actualisation, par l'entité de gestion de service général, de la fonction de support de capabilité de service de l'entité de gestion de service général ; et
l'exécution, par l'entité de gestion de service général, d'aucun traitement pour le client ; ou l'envoi d'une commande d'opération au client afin d'actualiser sa capabilité de service ; ou le forçage vers le client d'informations de service indiquant une actualisation de la capabilité de service.

6. Procédé selon la revendication 4, dans lequel l'obtention de la capabilité de service du client comprend :
l'obtention de la capabilité de service du client à partir d'informations de capabilité de service de client définies à l'avance ; ou
la réception d'informations de capabilité de service envoyées par le client ; ou
la réception d'une commande d'opération envoyée par le client en fonction d'une indication d'informations de service forcées par l'entité de gestion de service général et contenant des informations de capabilité de service du client.

7. Procédé selon la revendication 4, dans lequel la capabilité de service du client expéditeur correspond à la capabilité de service du client destinataire ou correspond à la capabilité de service de l'AS ou du réseau support de service si :
la capabilité de service du client expéditeur comporte un élément correspondant avec la capabilité de service du client destinataire, ou la capabilité de service du client expéditeur comporte un élément correspondant avec la capabilité de service de l'AS ou
la capabilité de service du réseau support de service comme il convient ; et si un protocole de service supporté par le client expéditeur comporte un élément identique avec un protocole de service supporté par le client destinataire, ou avec le protocole de service supporté par l'AS ou le réseau support de service comme il convient.

8. Procédé selon la revendication 7, dans lequel si le protocole de service est un protocole de couche de commande de service, le protocole de couche de commande de service supporté par le client, ou supporté par l'AS ou le réseau support de service, comprend au moins l'un d'un : Protocole de Lancement de Session, SIP, protocole H.323, Protocole de Transfert Hypertexte, HTTP, et Protocole d'Application Sans Fil, WAP.

9. Procédé selon la revendication 7, dans lequel si le protocole de service est un protocole de couche support de service, le protocole de couche support de service comprend : un format de codage/décodage de données de service et un protocole d'encapsulation de données de service ;
le client expéditeur, ou le client destinataire, ou l'AS ou le réseau support de service supporte un protocole d'encapsulation de données de service comprenant : un Protocole de Transport en Temps Réel, RTP, et/ou un Protocole Internet, IP ;
le format de codage/décodage de données de service supporté par le client expéditeur, ou le client destinataire, ou l'AS ou le réseau support de service comprend au moins l'un d'un : format VIDÉO RÉELLE, Format de Système Evolué, ESF, format d'Audio/Vidéo Insérée, AVI, format du Moving Pictures Expert Group 1, MPEG 1, format MPEG 2, format MPEG 4, format UNICODE et format à Multi-Débit Adaptatif, AMR.

10. Procédé selon la revendication 1, comprenant en outre:
le forçage actif d'informations de service ou l'envoi actif d'une commande d'opération, par l'entité de gestion de service général, au premier correspondant ; le lancement, par le premier correspondant, de l'opération de service avec le second correspondant en fonction des informations de service provenant de l'entité de gestion de service général, ou l'obtention d'informations de notification de service à partir des informations de service ; l'actualisation, par le premier correspondant, du protocole de service et/ou de la capabilité de service qui sont supportés par le premier correspondant en fonction de la commande d'opération provenant de l'entité de gestion de service général ; ou
le forçage actif d'informations de service ou l'envoi actif d'une commande d'opération, par l'entité de gestion de service général, au second correspondant ; le lancement, par le second correspondant, de l'opération de service avec le premier correspondant en fonction des informations de service provenant de l'entité de gestion de service général, ou l'obtention d'informations de notification de service à partir des informations de service ; l'actualisation, par le second correspondant, du protocole de service et/ou de la capabilité de service qui sont supportés par le second correspondant en fonction de la commande d'opération provenant de l'entité de gestion de service général.

11. Procédé selon la revendication 1, comprenant en outre :
la réception d'une demande de connexion depuis le premier correspondant.

12. Procédé selon la revendication 1, comprenant en outre :
si l'AS ou le réseau support de service est ajouté ou supprimé, ou si le protocole de service supporté par l'AS ou le réseau support de service est actualisé, l'actualisation, par l'entité de gestion de service général, d'un protocole de service supporté par l'entité de gestion de service général elle-même ; et
l'exécution, par l'entité de gestion de service général, d'aucun traitement pour le client; ou l'envoi d'une commande d'opération au client afin d'actualiser le protocole de service supporté par le client; ou le forçage d'informations de service indiquant une actualisation du protocole de service au client.

13. Procédé selon la revendication 1, dans lequel le client supporte au moins un protocole de service ; il existe au moins un AS, et chaque AS supporte au moins un protocole de service ; et il existe au moins un réseau support de service, et chaque réseau support de service supporte un ou plusieurs protocoles de service; l'entité de gestion de service général supporte des protocoles de service supportés par l'au moins un AS et l'au moins un réseau support de service ;
l'entité de gestion de service général détermine l'AS ou le réseau support de service qui exécute l'opération de service avec le client en fonction de la première demande d'opération du client, et détermine le protocole de service supporté par l'AS ou le réseau support de service, et exécute l'opération de service avec l'AS ou le réseau support de service déterminée en fonction du protocole de service déterminé.

14. Procédé selon l'une quelconque des revendications 1 à 13, dans lequel l'AS est un serveur de messagerie vocale instantanée, PoC, un serveur de Présence, un serveur de Gestion de Documents XML, XDM, un serveur de Diffusion en Continu, un serveur de Messagerie Instantanée, IM, un Centre de Service de Diffusion Multicast, BM-SC, ou un serveur de courrier électronique ;
le réseau support de service est un Sous-Système Multimédia IP, IMS, un réseau SIP, un réseau H.323, un réseau IP, un réseau à Mode de Transfert Asynchrone, ATM, un réseau à Commutation d'Etiquettes Multiprotocoles, MPLS, ou un réseau à Hiérarchie Numérique Synchrone, SDH.

15. Entité de gestion de service général, configurée entre un premier correspondant et un second correspondant, comprenant un ou plusieurs composants exploitables pour :
la réception, par l'entité de gestion de service général, d'une commande d'opération contenant une indication de service d'application provenant du premier correspondant ;
l'analyse syntaxique, par l'entité de gestion de service général, de la commande d'opération afin d'obtenir l'indication de service d'application et la détermination (306) d'un service d'application demandé par le premier correspondant ;
l'envoi, par l'entité de gestion de service général, d'un message contenant des informations de service au premier correspondant, les informations de service indiquant que le premier correspondant doit entrer des informations d'enregistrement demandées pour pouvoir utiliser le service d'application (308) ;
la réception, par l'entité de gestion de service général, d'une première demande d'opération contenant les informations d'enregistrement envoyées par le premier correspondant qui correspondent à un protocole de service supporté par le premier correspondant ;
l'analyse syntaxique, par l'entité de gestion de service général, de la première demande d'opération afin d'obtenir les informations d'enregistrement, et la construction d'une seconde demande d'opération contenant les informations d'enregistrement en fonction du protocole de service supporté par le second correspondant ;
l'envoi, par l'entité de gestion de service général, de la seconde demande d'opération au second correspondant pour exécuter l'enregistrement de service du premier correspondant ;
où
le premier correspondant est un client, et le second correspondant est un Serveur d'Application, AS, ou un réseau support de service dans lequel se trouve un AS.

16. Entité selon la revendication 15, dans laquelle les un ou plusieurs composants sont exploitables en outre pour :
à la réception de la première demande d'opération, déterminer si le protocole de service supporté par le premier correspondant correspond ou non au protocole de service supporté par le second correspondant ;
si le résultat de la détermination est oui, acheminer directement la première demande d'opération au second correspondant ;
sinon, fournir une fonction de support de protocole de service en fonction du protocole de service supporté par le second correspondant, construire et envoyer une seconde demande d'opération au second correspondant en fonction du protocole de service supporté par le second correspondant.

17. Entité selon la revendication 15, dans laquelle les un ou plusieurs composants comprennent :
une unité de gestion d'accès au service général, exploitable pour recevoir la première demande d'opération du client et envoyer une première commande de sollicitation à une unité de traitement de protocole client ; recevoir une seconde commande de sollicitation de l'unité de traitement de protocole client et envoyer une quatrième demande d'opération au client correspondant à un protocole de service supporté par le client ; et
l'unité de traitement de protocole client, exploitable pour recevoir la première commande de sollicitation depuis l'unité de gestion d'accès au service général, envoyer une seconde demande d'opération à l'AS ou au réseau support de service correspondant à un protocole de service supporté par l'AS ou au réseau support de service ; recevoir une troisième demande d'opération de l'AS ou du réseau support de service et envoyer la seconde commande de sollicitation à l'unité de gestion d'accès au service général.

18. Entité selon la revendication 17, dans laquelle l'unité de traitement de protocole client comprend au moins un module de traitement de protocole client, et chaque module de traitement de protocole client est connecté à un AS et/ou un réseau support de service, et supporte le protocole de service supporté par l'AS et/ou le réseau support de service;
chaque module de traitement de protocole client est exploitable pour recevoir la première commande de sollicitation depuis l'unité de gestion d'accès au service général, envoyer la seconde demande d'opération à l'AS connecté au module de traitement de protocole client et/ou au réseau support de service connecté au module de traitement de protocole client en fonction du protocole de service supporté par le module de traitement de protocole client ; et recevoir la troisième demande d'opération de service depuis l'AS ou le réseau support de service et envoyer la seconde commande de sollicitation à l'unité de gestion d'accès au service général.

19. Entité selon la revendication 17, dans laquelle les un ou plusieurs composants comprennent en outre une unité de traitement de données de service, exploitable pour recevoir des données de service depuis l'unité de gestion d'accès au service, envoyer les données de service à l'unité de traitement de protocole client à la conversion des données de service ; recevoir les données de service de l'unité de traitement de protocole client, envoyer les données de service à l'unité de gestion d'accès au service général à la conversion des données de service.

20. Entité selon la revendication 17, dans laquelle l'unité de gestion d'accès au service général est exploitable en outre pour envoyer des premières informations de service au client ; et
le module de traitement de protocole client est exploitable en outre pour envoyer des secondes informations de service à l'AS ou au réseau support de service.

21. Entité selon la revendication 17, dans laquelle l'unité de gestion d'accès au service général est exploitable en outre pour envoyer une première commande d'opération au client afin d'actualiser le protocole de service supporté par le client en fonction de la première commande d'opération ; et
le module de traitement de protocole client est exploitable en outre pour envoyer une seconde commande d'opération à l'AS ou au réseau support de service afin d'actualiser le protocole de service supporté par l'AS ou le réseau support de service en fonction de la seconde commande d'opération.

22. Système d'exécution d'un service d'application, comprenant un premier correspondant, un second correspondant, et une entité de gestion de service général selon l'une quelconque des revendications 15 à 20, dans lequel
le premier correspondant est un client, et le second correspondant est un Serveur d'Application, AS, ou un réseau support de service dans lequel se trouve un AS.

23. Système selon la revendication 22, dans lequel il existe au moins un AS et/ou au moins un réseau support de service ; chaque AS ou réseau support de service supportant au moins un protocole de service ;
l'entité de gestion de service général supporte des protocoles de service supportés par l'au moins un AS et l'au moins un réseau support de service.

24. Système selon la revendication 22 ou 23, dans lequel l'AS est un serveur de messagerie vocale instantanée, PoC, un serveur de Présence, un serveur de Gestion de Documents XML, XDM, un serveur de Diffusion en Continu, un serveur de Messagerie Instantanée, IM, un Centre de Service de Diffusion Multicast, BM-SC, ou un serveur de courrier électronique ;
le réseau support de service est un Sous-Système Multimédia IP, IMS, un réseau SIP, un réseau H.323, un réseau IP, un réseau à Mode de Transfert Asynchrone, ATM, un réseau à Commutation d'Etiquettes Multiprotocoles, MPLS, ou un réseau à Hiérarchie Numérique Synchrone, SDH.
